(19) **Europäisches Patentamt / European Patent Office / Office européen des brevets**

(11) **EP 1 806 889 A1**

(12) **EUROPEAN PATENT APPLICATION**

(43) Date of publication:
**11.07.2007 Bulletin 2007/28**

(51) Int Cl.:
**H04L 25/03** (2006.01)

(21) Application number: **06000293.8**

(22) Date of filing: **09.01.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Nokia Corporation**<br>**02150 Espoo (FI)** | (72) Inventor: **Mattellini, Luigi**<br>**20097 San Donato, Milano (IT)**<br><br>(74) Representative: **Eisenführ, Speiser & Partner**<br>**Patentanwälte Rechtsanwälte,**<br>**Postfach 31 02 60**<br>**80102 München (DE)** |

(54) **Apparatus and method for receiving signals transmitted over a distorting channel**

(57) A receiver, in particular a digital receiver, for receiving signals transmitted over a distorting channel, comprising a prefilter for converting an impulse response of the channel into its equivalent minimum phase, a prefilter for use in such a receiver, and a method for receiving signals transmitting over a distorting channel in such a receiver, wherein the prefilter comprises a first filter stage including at least one matched filter and a second filter stage provided downstream the first filter stage and including a single whitening filter.

Fig. 3

EP 1 806 889 A1

**Description**

FIELD OF THE INVENTION

The present invention relates to a receiver, in particular a digital receiver, for receiving signals transmitted over a distorting channel, comprising a prefilter for converting an impulse response of the channel into its equivalent minimum phase. Further, the present invention relates to such a prefilter for use in such a receiver. Finally, the present invention relates to a method for receiving signals transmitted over a distorting channel in a receiver, in particular a digital receiver, wherein an impulse response of the channel is converted into its equivalent minimum phase.

BACKGROUND OF THE INVENTION

In a high-rate digital transmission over dispersive channels, the received signal is generally affected by intersymbol interference (ISI) and additive white Gaussian noise (AWGN). The channel distortion if left uncompensated causes high error rates. ISI compensation or reduction in a receiver is performed by an equalizer.

It is well known that the optimum equalization algorithm is given by maximum likelihood sequence detection (MLSD) as described in the article "Maximum-Likelihood Sequence Estimation of Digital Sequences in the Presence of Intersymbol Interference" by G.D. Forney, Jr., in IEEE Transactions on Information Theory, IT-18:363-378, 1972. However, for channels with large delay spread, i.e. long impulse response, or transmission using non-binary signal alphabets, the receiver requires a very complex structur, but usually sub-optimum schemes have to be considered for a practical implementation.

Potential measures include a decision feedback equalization (DFE) or a reduced-state sequence estimation (RSSE) as described by M.V. Eyuboglu and S.U. Qureshi in the article "Reduced-State Sequence Estimation with Set Partitioning and Decision Feedback" published in IEEE Trans. on Communications, COM-36:13-20, 1988. For any sub-optimum trellis based equalizer, a minimum phase discrete overall channel impulse response is essential for high performance. In general, the overall channel impulse response has a mixed phase, and the introduction of a discrete time prefilter in front of the equalizer is required which prefilter transforms the channel impulse response into its minimum phase equivalent.

As to the prior art, further reference is made to the following documents:

[1] Naofal Al-Dhahir and John M. Cioffi. "MMSE Decision-Feedback Equalizers: Finite-Length Results". IEEE Transactions on Information Theory, vol. 41, No. 4, pp. 961-975, July 1995,

[2] Naofal Al-Dhahir and John M. Cioffi. "Fast Computation of Channel-Estimate Based Equalizers in Packet Data Transmission". IEEE Transactions on Signal Processing, vol. 43, No. 11, pp. 3462-3473, November 1995,

[3] WO 01/95509 A1.

In both the documents [1] and [2] it is proposed to considerably reduce the required processing power.

According to the teaching of document [3] the oversample streams have been grouped together in a different order. The method of document [3] has its main advantage when the fast Cholesky method as described in document [2] is carried out.

According to the teachings of all the documents [1], [2] and [3], the feedforward and feedback coefficients of a DFE are determined under the minimum mean square error (MMSE) criterion.

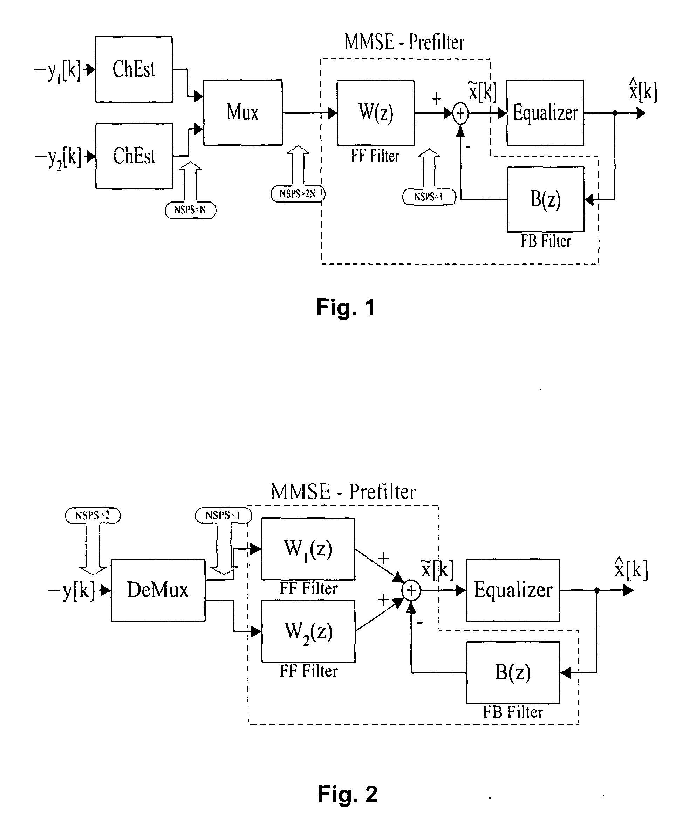

A possible implementation of the solution proposed in document [1] is shown in Figure 1, wherein the signal input to a feedforward filter W(z) is obtained by multiplexing together two (or more) signals from different antennas. In case of a single antenna receiver, a single oversampled signal would have been obtained. The feedforward filter W(z) is operating in the fractionally spaced domain. Its output is then down sampled in order to produce a symbol spaced signal.

In the following the case of the provision of a symbol spaced equalizer will be considered, wherein NSPS is the number of samples per symbol.

For sake of simplicity the case of NSPS=2 will be taken into account only. However, of course the extension to different oversampling factors is straightforward. An oversampling factor of 2 can be obtained, for instance, from a dual antenna receiver as shown in figure 1 where each antenna provides a symbol spaced stream or from a single antenna receiver where two samples per symbol are provided. The received signal can be written as

$$y = Hx + n \qquad (1)$$

where the following definitions apply

$$y_k \equiv \begin{bmatrix} y_1[k] \\ y_2[k] \end{bmatrix}; \quad h_k \equiv \begin{bmatrix} h_1[k] \\ h_2[k] \end{bmatrix}; \quad n_k \equiv \begin{bmatrix} n_1[k] \\ n_2[k] \end{bmatrix}; \text{ (intra symbol)}$$

$$H_{\{2 \times Nf, Nf+L-1\}} \equiv \begin{bmatrix} h_0 & \cdots & h_{L-1} & 0 & \cdots & 0 \\ 0 & h_0 & \cdots & h_{L-1} & \cdots & 0 \\ \vdots & & \ddots & & \ddots & \\ 0 & \cdots & 0 & h_0 & \cdots & h_{L-1} \end{bmatrix}; \qquad (2)$$

$$y_{\{2 \times Nf,1\}} \equiv \begin{bmatrix} y_{K+Nf-1} \\ \vdots \\ y_{K+1} \\ y_K \end{bmatrix}; \quad n_{\{2 \times Nf,1\}} \equiv \begin{bmatrix} n_{K+Nf-1} \\ \vdots \\ n_{K+1} \\ n_K \end{bmatrix}; \quad x_{\{Nf+L-1,1\}} \equiv \begin{bmatrix} x[K+Nf-1] \\ x[K+Nf-2] \\ \vdots \\ x[K-L+1] \end{bmatrix}$$

and H is the convolution channel matrix, x are training samples and n is the noise, subscripts "1" and "2" refer to intra symbols of odd and even samples, L is the channel length, and Nf is the feedforward filter length.

Under the MMSE criterion the feedforward (w) and feedback (b) filter coefficients are given by:

$$\begin{cases} w^* = \tilde{h}^* (HH^* + \sigma_n^2 I - HS^T SH^*)^{-1} \\ b^* = w^* HS^T \end{cases} \qquad (3)$$

where

$$\tilde{h}^*_{\{1,Nf\}} \equiv [\underbrace{0 \ \cdots \ 0}_{Nf-L} \ \underbrace{h_{L-1}^* \ \cdots \ h_0^*}_{L}] \ , \ \sigma_n^2 I_{\{Nf,Nf\}} = E[nn^*] \text{ and}$$

$$S_{\{L-1,Nf+L-1\}} = \begin{bmatrix} 0 & \cdots & 0 & \vdots & 1 & & \\ \vdots & & \vdots & \vdots & & \ddots & \\ 0 & \cdots & 0 & \vdots & & & 1 \end{bmatrix} = [0_{\{L-1,Nf\}} \ \vdots \ I_{\{L-1,L-1\}}] \qquad (4)$$

The receiver structure according to document [3] is shown in Figure 2 where the case of a single antenna receiver providing two samples per symbol is considered (however, the extension to a multi antenna receiver or to different over sampling factor is straightforward). In this case a bank of two feedforward filters $W_1(z)$ and $W_2(z)$ connected in parallel to the output of a demultiplexer DeMux is provided. Each filter $W_1(z)$, $W_2(z)$ is processing a symbol spaced sub-stream of the received signal. The filter coefficients under the MMSE criterion are given by document (3) where now the following definitions apply:

$$y_{(2Nf,1)} \equiv \begin{bmatrix} y_1(K+Nf-1:K) \\ \hline y_2(K+Nf-1:K) \end{bmatrix}; \quad H_{(2Nf,Nf+L-1)} \equiv \begin{bmatrix} H_1 \\ \hline H_2 \end{bmatrix}$$

$$x_{(Nf+L-1,1)} \equiv \begin{bmatrix} x[K+Nf-1] \\ x[K+Nf-2] \\ \vdots \\ x[K-L+1] \end{bmatrix}; \quad n_{(2Nf,1)} \equiv \begin{bmatrix} n_1(K+Nf-1:K) \\ \hline n_2(K+Nf-1:K) \end{bmatrix} \tag{5}$$

and

$$\mathbf{y}_i(K+Nf-1:K) \equiv \begin{bmatrix} y_i[K+Nf-1] \\ y_i[K+Nf-2] \\ \vdots \\ y_i[K] \end{bmatrix}; \quad \mathbf{n}_i(K+Nf-1:K) \equiv \begin{bmatrix} n_i[K+Nf-1] \\ n_i[K+Nf-2] \\ \vdots \\ n_i[K] \end{bmatrix} \tag{6}$$

$$H_i \equiv \begin{bmatrix} h_i[0] & \cdots & h_i[L-1] & 0 & \cdots & 0 \\ 0 & h_i[0] & \cdots & h_i[L-1] & \cdots & 0 \\ \vdots & & \ddots & & \ddots & \\ 0 & \cdots & 0 & h_i[0] & \cdots & h_i[L-1] \end{bmatrix}$$

As it becomes clear from the above, the structures required by the calculation result in a rather complex construction for the receiver.

SUMMARY OF THE INVENTION

It is therefore an object of the invention to provide an apparatus and a method which allow the above-mentioned problems to be solved and in particular a reduced complexity of the receiver structure.

In order to achieve the above and further objects, in accordance with a first aspect of the present invention, there is provided a receiver, in particular a digital receiver, for receiving signals transmitted over a distorting channel, comprising a prefilter for converting an impulse response of the channel into its equivalent minimum phase, and a distortion corrector provided downstream said prefilter, wherein said prefilter comprises a first filter stage including at least one matched filter and a second filter stage provided downstream said first filter stage and including a single whitening filter.

In accordance with a second aspect of the present invention, there is provided a prefilter for use in a receiver, in particular a digital receiver, the receiver being adapted to receive signals transmitted over a distorting channel and comprising the prefilter for converting an impulse response of the channel into its equivalent minimum phase and a distortion corrector provided downstream said prefilter, wherein said prefilter comprises a first filter stage including at least one matched filter and a second filter stage provided downstream said first filter stage and including a single whitening filter.

In accordance with a third aspect of the present invention, there is provided a method for receiving signals transmitted over a distorting channel in a receiver, in particular a digital receiver, comprising the steps of

filtering the signals in a first filter stage including at least one matched filter,

filtering the output signals of said first filter stage in a second filter stage including a single whitening filter,

said first and second filter stages defining a prefilter for converting an impulse response of the channel into its equivalent minimum phase, and

correcting a distortion in the output signals of said second filter stage in a distortion corrector.

Further advantageous embodiments of the present invention are defined in the dependent claims.

Instead of using a single filter stage for converting the channel impulse response into its equivalent minimum phase as it is done by a MMSE-DFE receiver in the prior art, the present invention teaches to perform this operation in two steps by providing a first filter stage and a second filter stage. The first filter stage includes at least one matched filter, whereas the second filter stage provided downstream the first filter stage includes a single whitening filter.

An advantage of the present invention, compared to the prior art solutions, is in the reduced complexity of the receiver structure in particular for processing high oversampling rates. Especially for multiply antenna receivers, the prefilter can easily become a bottleneck of the overall receiver in terms of operations required, which is substantially overcome by the teaching of the present invention.

Mainly, but not exclusively, the present invention is focused onto receivers operating with a sample rate bigger than one sample per symbol, i.e. making use of more than one sample per symbol, and/or equipped with more than one antenna. Exactly the same algorithms can be used in receivers equipped with one or more than one antenna, and the streams from a different antenna can be viewed as additional oversampling dimensions. The present invention preferably requires a less number of complex operations for oversampling factors higher than or equal to 4, or two antennas with oversampling factors of 2, and feedforward filter lengths bigger than seven samples. If the oversampling factor is 2, the present invention will preferably be advantageous for feedforward filter orders higher than 8. Further, the distortion corrector can be provided as an equalizer which can be symbol spaced or fractionally spaced.

EP 1 032 170 A1 discloses an apparatus and a method for receiving signals transmitted over a distorted channel by using a first filter stage including one matched filter and a second filter stage. However, this prior art only deals with the case of a single antenna receiver, but does not give any hint at to apply the apparatus and method disclosed therein to receivers operating with a sample rate bigger than one sample per symbol and/or receivers equipped with more than one antenna and therefore does not propose a particular implementation in such receivers as taught by the present invention. Further, this prior art does not suggest the provision of a plurality of matched filters in the first filter stage with each matched filter filtering a symbol spaced sub-stream. Finally, this prior art does not teach to provide the second filter stage with a single whitening filter function. So, this prior art neither anticipates the present invention nor renders it obvious.

The apparatus and the method according to the present invention can be applied to several technologies. Preferably, the apparatus according to the present invention refers to a digital receiver in the GSM/EDGE system, but is not restricted thereto. Moreover, the present invention can be applied to every high rate digital transmission over dispersive channels.

A more complete appreciation of the present invention and the scope thereof can be obtained from the accompanying drawings which are briefly summarized below, the following detailed description of the presently preferred embodiments of the invention, and to the appended claims.

BRIEF DESCRIPTION OF THE DRAWINGS

Figure 1 shows a schematic block diagram of a prior art MMSE-DFE receiver structure;

Figure 2 shows a schematic block diagram of another prior art MMSE/DFE receiver structure;

Figure 3 shows a schematic block diagram of a receiver structure including a linear prediction based prefilter in accordance with a first preferred embodiment of the present invention;

Figure 4 shows a schematic block diagram of a receiver structure with a fractionally spaced implementation of a linear prediction prefilter according to a second preferred embodiment of the present invention; and

Figure 5 shows a schematic block diagram of a multi-antenna receiver structure with a fractionally spaced implementation of a linear prediction prefilter in accordance of a third preferred embodiment of the present invention.

DESCRIPTION OF THE PREFERRED EMBODIMENTS

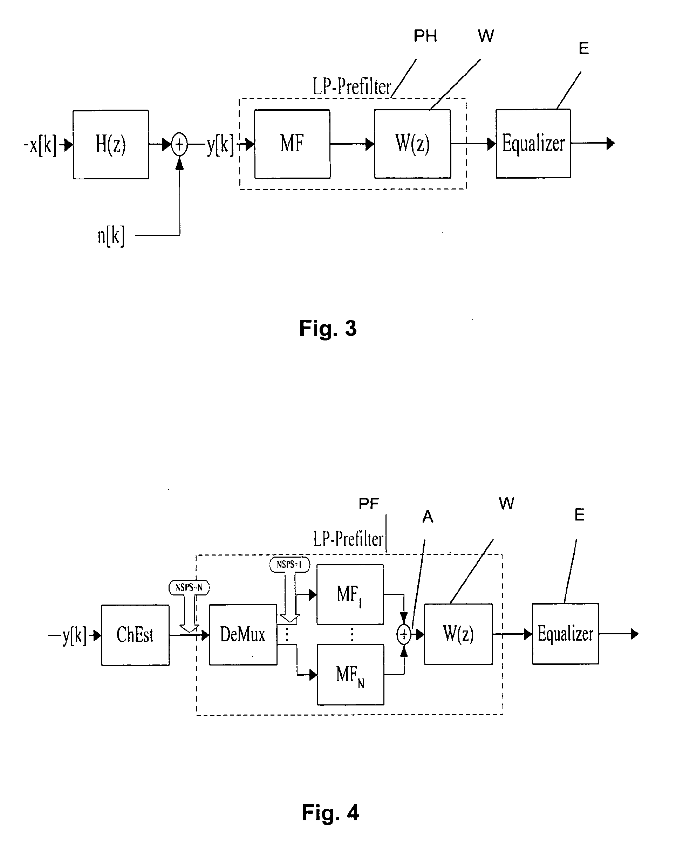

In the following, preferred embodiments of the present invention will be described with reference to Figures 3 to 5. With respect thereto, it should be noted that, as far as the equations (1) to (6) and the associated descriptions as given above apply to the preferred embodiments, they are not repeated in the following description.

A preferred embodiment of a time decreased symbol spaced receiver structure is shown in figure 3. This receiver structure comprises a linear prediction (LP) based prefilter PF including a first filter stage and a second filter stage arranged downstream the first filter stage. The first filter stage comprises a matched filter MF, and the second stage comprises a single whitening filter W.

After the matched filter MF, in order to convert the impulse response of the channel so as to obtain a minimum phase, in the whitening filter W all the zeros have to be deleted out of the unit circle in the Z domain. Ideally an all-poles filter can perform this operation. Practically, even knowing the pole positions (roots), which is a rather demanding process in terms of computations required, due to noise and round off errors, the IIR (infinite impulse response) whitening filter might be not stable. Therefore, the all-poles IIR filter is preferably approximated by providing an all-zeros FIR filter, and as FIR filter a backward linear predictor is preferably selected, given that the impulse response of a backward linear prediction filter has a maximum phase (corresponding to the minimum phase for a forward linear predictor).

After the MF in the whitening filter W it is obtained

$$H(z)H^*(1/z^*) = H_{min}(z)H_{min}^*(1/z^*),.  \quad (7)$$

where $H_{min}(z)$ is the transfer function of the minimum phase channel impulse response in the Z domain and $H(z)$ is the transfer function of the channel impulse response which will be in general a mixed phase (with roots inside and outside the unit circle in the Z domain).

So, it is wanted to provide a filtering function $W(z)$ satisfying the condition

$$H(z)H^*(1/z^*)W(z) = H_{min}(z)  \quad (8)$$

and therefore, by combining equations (7) and (8), it is obtained

$$H_{min}(z)H_{min}^*(1/z^*)W(z) = H_{min}(z) \Rightarrow W(z) = 1/H_{min}^*(1/z^*)  \quad (9)$$

The provision of a filter W having a function $W(z)$ as expressed by equation (9) is equivalent to the provision of a filter $G(z)$ as follows

$$W(z) = 1/H_{min}^*(1/z^*) \Leftrightarrow G(z) = 1/H_{min}(1/z)  \quad (10)$$

As for the MF, in the time domain, equation (10) is equivalent to g[k] = w*[-k]; i.e. filter g is the complex-conjugated time reversed version of w. Instead of estimating an anti-causal filter w, it is to be looked for a causal version g. The filter $G(z)$ is imposed to be a forward linear predictor

$$G(z) = 1 - \sum_{i=1}^{Nf-1} g[i] z^{-i} \qquad (11)$$

As for every linear predictor (auto regressive modeling) if it is defined

$$r_{hh}[k] = h[k] \otimes h^*[-k] \qquad (12)$$

the Yule-Walker equations can be written as

$$\begin{bmatrix} r_{hh}[0] & r_{hh}[-1] & \cdots & r_{hh}[-Nf+2] \\ r_{hh}[1] & r_{hh}[0] & \cdots & r_{hh}[-Nf+3] \\ \vdots & \vdots & \ddots & \vdots \\ r_{hh}[Nf-2] & r_{hh}[Nf-3] & \cdots & r_{hh}[0] \end{bmatrix} \begin{bmatrix} g[1] \\ g[2] \\ \vdots \\ g[Nf-1] \end{bmatrix} = \begin{bmatrix} r_{hh}[1] \\ r_{hh}[2] \\ \vdots \\ r_{hh}[Nf-1] \end{bmatrix} \qquad (13)$$

Solving the system in equation (13) gives the whitening filter coefficients.

It should be noted that $Nf$-1 coefficients are now estimated because the first coefficient is already known to be 1. So, the whitening filter will have therefore $Nf$ coefficients.

For a fractionally spaced implementation of the LP prefilter, the receiver structure is preferably provided as shown e.g. in Figure 4. This receiver structure differs from that of Figure 3 in that the first filter stage comprises not only one matched filter, but a plurality of symbol spaced matched filters $MF_1$ to $MF_N$, and further a demultiplexer DeMux and an adder A are additionally provided. The received fractionally spaced stream is decomposed into a plurality of symbol spaced sub-streams by the demultiplexer DeMux. The number of the plurality of symbol spaced sub-streams output from the demultiplexer DeMux is equal to NSPS (number of samples per symbol), and likewise the number of the plurality of symbol spaced matched filters $MF_1$ to $MF_N$ ist equal to NSPS. Each sub-stream is filtered by an associated symbol spaced matched filter $MF_1..MF_N$ with N=NSPS. The NSPS sub-streams output from the plurality of symbol spaced matched filters $MF_1$ to $MF_N$ are then added from the adder to a single symbol spaced stream which is output from the adder A and input into the whitening filter W, and the filtering function W(z) of the single whitening filter W is calculated and applied.

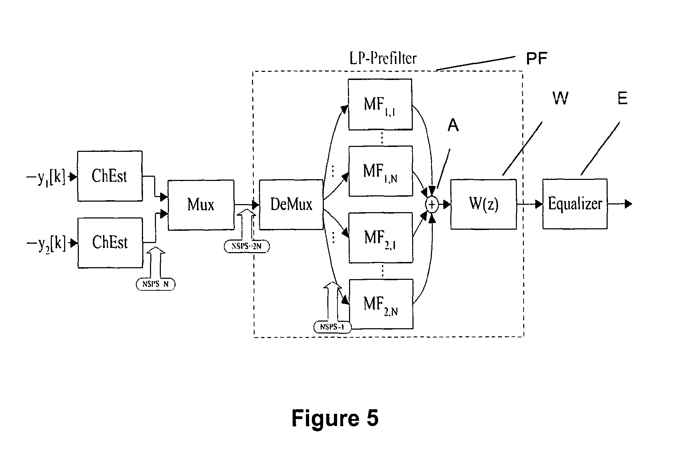

The same criterion can be applied for a multi antenna receiver. As an example, Figure 5 shows an embodiment of a two antennas receiver structure which differs from the single antenna embodiment of Figure 4 in that the number of the plurality of symbol spaced matched filters $MF_{1.1}$ to $MF_{1.N}$ and $MF_{2.1}$ to $MF_{2.N}$ is twice the number of the plurality of symbol matched filters of the embodiment of Figure 4 and that a multiplexer Mux is additionally provided. The oversampled streams arising from the two antennas are multiplexed together by the multiplexer Mux so to form a single stream which is output from the multiplexer Mux and input into the demultiplexer DeMux and has an oversampling factor equal to NSPS x 2, i.e. twice NSPS. The number of the plurality of symbol spaced matched filters $MF_{1.1}$ to $MF_{1.N}$ and $MF_{2.1}$ to $MF_{2.N}$ is equal to NSPS x 2, too. So, according to this stream a matched filter $MF_{1.1}$ .....$MF_{1.N}$, $MF_{2.1}$...$MF_{2.N}$ is provided for every single symbol spaced stream. The outputs from the matched filters $MF_{1.1}$ to $MF_{1.N}$ and $MF_{2.1}$ to $MF_{2.N}$ are added by the adder to a single symbol spaced stream which is output from the adder and input into the single whitening filter W, and the filtering function W(z) of the single whitening filter W is calculated and applied.

It should be noted that the latter embodiment described above and shown in Figure 5 is not restricted to the provision of two antennas, but can of course be applied to any multi antenna receiver structure, wherein the oversampling factor is equal to NSPS multiplied by the number of antennas provided, and likewise the number of the plurality of symbol spaced matched filters is equal to NSPS multiplied by the number of antennas provided.

In all the above described embodiments, the output signal from the prefilter PF, which output signal is the output signal of the whitening filter W, is input into an equalizer E which operates as a distortion corrector. The equalizer E can be symbol spaced or fractionally spaced, wherein in the above described preferred embodiments the provision of a symbol spaced equalizer is preferred.

Finally, it should be noted that the above preferred descriptions are of preferred examples for implementing the present invention, but the scope of the present invention should not necessarily be limited by this description. The scope of the present invention is defined by the following claims.

**Claims**

1. A receiver, in particular a digital receiver, for receiving signals transmitted over a distorting channel, comprising a prefilter for converting an impulse response of the channel into its equivalent minimum phase, and a distortion corrector provided downstream said prefilter, wherein said prefilter comprises a first filter stage including at least one matched filter and a second filter stage provided downstream said first filter stage and including a single whitening filter.

2. The receiver according to claim 1, which is adapted to make use of more than one sample per symbol.

3. The receiver according to claim 2, comprising at least one sampling means for producing sample signals from the received signal, wherein said at least one sampling means is provided upstream said prefilter and is adapted to produce more than one sample per symbol.

4. The receiver according to at least any one of the preceding claims, wherein said distortion corrector is an equalizer.

5. The receiver according to at least any one of the preceding claims, wherein the implementation of said distortion corrector is a symbol spaced one.

6. The receiver according to at least any one of claims 1 to 4, wherein the implementation of said distortion corrector is a fractionally spaced one.

7. The receiver according to at least any one of the preceding claims, wherein said prefilter is a linear prediction based prefilter.

8. The receiver according to at least any one of the preceding claims, wherein said whitening filter comprises an all-poles filter, in particular an all-poles infinite impulse response filter.

9. The receiver according to claim 8, wherein an all-zeros finite impulse response filter is provided as said all-poles filter.

10. The receiver according to claim 9, wherein a backward linear prediction filter is provided as finite impulse response filter, the impulse response of said backward linear prediction filter including a maximum phase.

11. The receiver according to at least any one of the preceding claims, wherein the implementation of said prefilter is a fractionally spaced one, further comprising a decomposing means for decomposing a fractionally spaced stream into a plurality of symbol spaced sub-streams, the number of said plurality of symbol spaced sub-streams being at least equal to the number of samples per symbol, wherein said first filter stage includes a plurality of symbol spaced matched filters connected in parallel to the output of said decomposing means, the number of said plurality of symbol spaced matched filters being at least equal to the number of symbol spaced sub-streams, and said prefilter further comprises an adder for summing the output signals of said plurality of symbol spaced matched filters so as to produce a single symbol spaced stream input into said whitening filter.

12. The receiver according to at least any one of claims 1 to 10, wherein the implementation of said prefilter is a fractionally spaced one, further comprising a plurality of antennas, a multiplexer for multiplexing oversampled streams arising from said plurality of antennas so as to form a single stream having an oversampling factor being at least equal to the number of samples per symbol multiplied by the number of antennas, and a decomposing means for decomposing a fractionally spaced stream into a plurality symbol spaced sub-streams, the number of said plurality of symbol spaced sub-streams being at least equal to the number of samples per symbol multiplied by the number of antennas, the input of said decomposing means being coupled to the output of said multiplexer, wherein said first filter stage includes a plurality of symbol spaced matched filters connected in parallel to the output of said decomposing means, the number of said plurality of symbol spaced matched filters being at least equal to the number of samples per symbol multiplied by the number of antennas, and said prefilter further comprises an adder for summing the output signals of said plurality of symbol spaced matched filters so as to produce a single symbol spaced stream input into said whitening filter.

13. The receiver according to claim 11 or 12, wherein said decomposing means comprises a multiplexer.

14. A prefilter for use in a receiver, in particular a digital receiver, the receiver being adapted to receive signals transmitted over a distorting channel and comprising the prefilter for converting an impulse response of the channel into its equivalent minimum phase and a distortion corrector provided downstream said prefilter, wherein said prefilter comprises a first filter stage including at least one matched filter and a second filter stage provided downstream said first filter stage and including a single whitening filter.

15. The prefilter according to claim 14, being a linear prediction based prefilter.

16. The prefilter according to claim 14 or 15, wherein said whitening filter comprises an all-poles filter, in particular an all-poles infinite impulse response filter.

17. The prefilter according to claim 16, wherein an all-zeros finite impulse response filter is provided as said all-poles filter.

18. The prefilter according to claim 17, wherein a backward linear prediction filter is provided as finite impulse response filter, the impulse response of said backward linear prediction filter including a maximum phase.

19. The prefilter according to at least any one of claims 14 to 18, wherein the implementation of said prefilter is a fractionally spaced one, further, comprising a decomposing means for decomposing a fractionally spaced stream into a plurality of symbol spaced sub-streams, the number of said plurality of symbol spaced sub-streams being at least equal to the number of samples per symbol, wherein said first filter stage includes a plurality of symbol spaced matched filters connected in parallel to the output of said decomposing means, the number of said plurality of symbol spaced matched filters being at least equal to the number of symbol spaced sub-streams, and said prefilter further comprises an adder for summing the output signals of said plurality of symbol spaced matched filters so as to produce a single symbol spaced stream input into said whitening filter.

20. The prefilter according to at least any one of claims 14 to 18, wherein the implementation of said prefilter is a fractionally spaced one, further comprising a plurality of antennas, a multiplexer for multiplexing oversampled streams arising from said plurality of antennas so as to form a single stream having an oversampling factor being at least equal to the number of samples per symbol multiplied by the number of antennas, and a decomposing means for decomposing a fractionally spaced stream into a plurality symbol spaced sub-streams, the number of said plurality of symbol spaced sub-streams being at least equal to the number of samples per symbol multiplied by the number of antennas, the input of said decomposing means being coupled to the output of said multiplexer, wherein said first filter stage includes a plurality of symbol spaced matched filters connected in parallel to the output of said decomposing means, the number of said plurality of symbol spaced matched filters being at least equal to the number of samples per symbol multiplied by the number of antennas, and said prefilter further comprises an adder for summing the output signals of said plurality of symbol spaced matched filters so as to produce a single symbol spaced stream input into said whitening filter.

21. The prefilter according to claim 19 or 20, wherein said decomposing means comprises a multiplexer.

22. A method for receiving signals transmitted over a distorting channel in a receiver, in particular a digital receiver, comprising the steps of
filtering the signals in a first filter stage including at least one matched filter,
filtering the output signals of said first filter stage in a second filter stage including a single whitening filter,
said first and second filter stages defining a prefilter for converting an impulse response of the channel into its equivalent minimum phase, and
correcting a distortion in the output signals of said second filter stage in a distortion corrector.

23. The method according to claim 22, comprising the further step of taking samples of the received signal, prior to the filtering, by making use of more than one sample per symbol, and to input said samples into said first filter stage.

24. The method according to claim 22 or 23, wherein the whitening filtering is carried out as an all-poles filtering, in particular an all-poles infinitive impulse response filtering, in said second filter stage.

25. The method according to claim 24, wherein the all-poles filtering is carried out as an all-zeros finite impulse response filtering.

26. The method according to claim 25, wherein the finite impulse response filtering is carried out as a backward linear prediction filtering having a maximum phase.

27. The method according to at least any one of claims 22 to 26 for receiving signals in a receiver wherein the implementation of said prefilter is a fractionally spaced one, comprising the further steps of
decomposing a fractionally spaced stream into a plurality of symbol spaced sub-streams, the number of said plurality of symbol spaced sub-streams being at least equal to the number of samples per symbol,
filtering each symbol spaced sub-stream in a symbol spaced matched filter of a plurality of symbol spaced matched filters included in said first filter stage and connected in parallel, the number of said plurality of symbol spaced matched filters being at least equal to the number of symbol spaced sub-streams,
summing the output signals of said plurality of symbol spaced matched filters so as to produce a single symbol spaced stream, and
inputting said single symbol spaced stream into the whitening filter of said second filter stage.

28. The method according to claims 22 to 26 for receiving signals in a receiver wherein the implementation of said prefilter is a fractionally spaced one, comprising the further steps of
receiving the signals via a plurality of antennas,
multiplexing oversampled streams arising from said plurality of antennas so as to form a single stream having an oversampling factor being at least equal to the number of samples per symbol multiplied by the number of antennas,
decomposing a fractionally spaced stream into a plurality of symbol spaced sub-streams being at least equal to the number of sample per symbol multiplied by the number of antennas,
filtering each symbol spaced sub-stream in a symbol spaced matched filter of a plurality of symbol spaced matched filters included in said first filter stage and connected in parallel, the number of said plurality of symbol spaced matched filters being at least equal to the number of samples per symbol multiplied by the number of antennas,
summing the output signals of said plurality of symbol spaced matched filters so as to produce a single symbol spaced stream, and
inputting said single symbol spaced stream into the whitening filter of said second filter stage.

**Fig. 1**

**Fig. 2**

PH          W                    E

LP-Prefilter

-x[k] → | H(z) | → (+) → y[k] → | MF | → | W(z) | → | Equalizer | →

n[k]

## Fig. 3

PF          A          W          E

LP-Prefilter

-y[k] → | ChEst | → | DeMux | → | MF₁ | ... | MFₙ | → (+) → | W(z) | → | Equalizer | →

## Fig. 4

**Figure 5**

**European Patent Office**

**EUROPEAN SEARCH REPORT**

Application Number

EP 06 00 0293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 1 032 170 A (LUCENT TECHNOLOGIES INC) 30 August 2000 (2000-08-30) * the whole document * ----- | 1-28 | INV. H04L25/03 |
| X | WO 2005/020495 A (AIRGO NETWORKS, INC; STEELE, GREGORY; VAN NEE, RICHARD D.J) 3 March 2005 (2005-03-03) * page 10, paragraph 53 - page 12, paragraph 63 * * figures 4-8 * ----- | 1-28 | |
| X | US 6 862 326 B1 (ERAN ALON ET AL) 1 March 2005 (2005-03-01) * abstract * * column 3, line 12 - column 4, line 35 * * column 9, line 37 - line 44 * * column 11, line 22 - column 13, line 65 * * column 18, line 46 - line 53 * ----- | 1,14,22 | |

TECHNICAL FIELDS SEARCHED (IPC)

H04L

The present search report has been drawn up for all claims

| Place of search | Date of completion of the search | Examiner |
|---|---|---|
| Munich | 2 June 2006 | Schiffer, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 0293

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2006

| Patent document cited in search report | | Publication date | Patent family member(s) | | Publication date |
|---|---|---|---|---|---|
| EP 1032170 | A | 30-08-2000 | NONE | | |
| WO 2005020495 | A | 03-03-2005 | AU | 2004302528 A1 | 03-03-2005 |
| | | | CA | 2536014 A1 | 03-03-2005 |
| | | | US | 2005042997 A1 | 24-02-2005 |
| US 6862326 | B1 | 01-03-2005 | NONE | | |

For more details about this annex : see Official Journal of the European Patent Office, No. 12/82

## REFERENCES CITED IN THE DESCRIPTION

### Patent documents cited in the description

- WO 0195509 A1

- EP 1032170 A1

### Non-patent literature cited in the description

- **G.D. FORNEY, JR.** Maximum-Likelihood Sequence Estimation of Digital Sequences in the Presence of Intersymbol Interference. *IEEE Transactions on Information Theory,* 1972, vol. IT-18, 363-378
- Reduced-State Sequence Estimation with Set Partitioning and Decision Feedback. *IEEE Trans. on Communications,* 1988, vol. COM-36, 13-20

- **NAOFAL AL-DHAHIR ; JOHN M. CIOFFI.** MMSE Decision-Feedback Equalizers: Finite-Length Results. *IEEE Transactions on Information Theory,* July 1995, vol. 41 (4), 961-975
- **NAOFAL AL-DHAHIR ; JOHN M. CIOFFI.** Fast Computation of Channel-Estimate Based Equalizers in Packet Data Transmission. *IEEE Transactions on Signal Processing,* November 1995, vol. 43 (11), 3462-3473